# EUROPÄISCHE PATENTSCHRIFT

(11) **EP 1 110 607 B1**
(45) Veröffentlichungstag und Bekanntmachung des Hinweises auf die Patenterteilung: **16.10.2002**
(21) Anmeldenummer: 00127326.7
(22) Anmeldetag: 13.12.2000
(51) Int. Cl.: B01J 39/08, B01J 29/06, C01B 39/02, B01J 20/18

(54) **Verfahren zur Modifizierung ionenaustauschbarer Stoffe**
Modification process of a ion exchangable material
Procédé de modification d'une substance échangeuse d'ions

(30) Priorität: 21.12.1999 DE 19961597
(43) Veröffentlichungstag der Anmeldung: 27.06.2001
(73) Patentinhaber: Chemiewerk Bad Köstritz GmbH, 07586 Bad Köstritz (DE)
(72) Erfinder: Brandt, Alfons, Dr., 06198 Salzmünde (DE); Unger, Baldur, Dr., 06846 Dessau (DE); Gojdar, Balint, 07586 Bad Köstritz (DE); Tschritter, Hartmut, 07546 Gera (DE)
(74) Vertreter: Weidelt, Manfred, Dipl.-Ing.(FH)

(56) Entgegenhaltungen:
- EP-A- 0 462 598
- EP-A- 0 667 183
- US-A- 3 375 065
- US-A- 4 556 550
- US-A- 5 916 836

## Beschreibung

Die Erfindung betrifft ein Verfahren zur Modifizierung ionenaustauschbarer Stoffe, wie, Zeolithe. ionenaustauschbare Strukturanaloga der Zeolithe. ionenaustauschbare. röntgenamorphe, anorganische Substanzen, Gemische aus den vorher genannten Stoffgruppen sowie ionenaustauschbare. organische Substanzen, wobei insbeondere solche Kationen in die Substanzen integriert werden sollen. gegenüber welchen die zu behandelnden Substanzen in wäßrigem Medium eine geringe Selektivität gegenüber einem Eintausch dieser Ionen aufweisen. Der Eintausch der betreffenden Kationen erfolgt in die vorher gezielt mit Ammoniumionen beladenen ionenaustauschbaren Stoffe unter Bedingungen, welche den Eintausch der gewünschten Kationen begünstigen, die gezielte Entfernung von flüchtigem Ammoniak bzw. flüchtigen Ammoniumverbindungen jedoch ausschließt. Die Erfindung betrifft weiterhin, wie beschrieben, ionenaustauschbare. modifizierte Zeolithe. welche bevorzugt in Adsorptionsund katalytischen Prozessen eingesetzt werden können.

Zeolithe sind kristalline, mikroporöse Gerüstalumosilicate. vgl. D. W. Breck: "Zeolite Molecular Sieves". John Wiley & Sons. New York. 1974. p.5. Inzwischen kennt man über 98 unterschiedliche Strukturen, vgl.: W.M. Meier. D. H. Olson. C. Baerlocher: "Atlas of Zeolite Structure Types". 4 th rev. Ed.. Elsevier. London. 1996.

Aufgrund ihres besonderen Aufbaus sind die einzelnen Strukturen selbst noch in weiten Grenzen der chemischen Zusammensetzung variierbar. Dies betrifft einerseits die Menge und Art an im Gerüst mehr oder weniger frei beweglichen Kationen, vgl.: R. P. Townsend: "Ion Exchange in Zeolites". in: "Studies in Surface Science and Catalysis", Elsevier. Amsterdam, Vol. 58, 1991, pp. 359-390, jedoch inzwischen gleichermaßen die gerüstbildenden Ionen selbst. vgl: R. Szostak: "Molecular Sieves: Principles of Synthesis and Identification", Van Nostrand Reinhold. New York. 1989, pp. 205-281.

Aufgrund dieser Vielfalt an Eigenschaftsmerkmalen können Zeolithe als Ionenaustauscher, vgl.: R. P. Townsend. Ioc. cit.. Adsorptionsmittel. vgl.: D. M. Ruthven: "Principles of Adsorption and Adsorption Processes". John Wiley & Sons. New York, 1984, und/oder Katalysatorkomponente, vgl.: J. Weitkamp, L. Puppe (Eds.): "Catalysis and Zeolites: Fundamentals and Applications". Springer, Berlin, 1999, eingesetzt werden.

Speziell für die beiden zuletzt genannten Anwendungsgebiete ist es oft notwendig, die syntheseseitig in einer bestimmten, gewünschten Zeolithstruktur vorhandenen mehr oder weniger frei beweglichen Kationen - meist Na. K oder organische Ammoniumionen - durch andere zu ersetzen. Dieser Ersatz gelingt in den meisten Fällen durch direkten Ionenaustausch in wäßrigen Lösungen, wobei es meist von Vorteil ist, das einzutauschende Ion überstöchiometrisch anzubieten, vgl.: R. P. Townsend: "ion Exchange in Zeolites" in "Studies in Surface Science and Catalysis". Elsevier. Amsterdam. Vol. 58, 191. pp. 359-390; bes.: pp 365-375. Es gibt jedoch auch Fälle, in denen die Selektivität des Zeolithen gegenüber einem einzutauschenden Ion so gering ist, daß der erfolgreiche Ionenaustausch die Anwendung einer sehr hohen überstöchiometrischen Menge erfordert. In solchen Fällen gebietet es die Ökonomie und Ökologie dieser Prozesse, daß die überschüssige Menge an Kationen recycliert wird. Dies ist z. B. für den Austausch mit Ammoniumionen, vgl. US-PS 4.058.484, bzw. mit Li-Ionen, vgl. US-PS 5.919.287 bekannt. Es gibt auch Fälle, bei denen die gewünschte Kationenform über eine Zwischenstufe erreicht wird. Dies betrifft beipielsweise die Herstellung der aciden Form von Y-Zeolithen, welche großtechnisch als Komponente in Erdölverarbeitungskatalysatoren eine bedeutende Rolle spielen. Da sich in diesem Fall eine direkte Behandlung der Na-haltigen Syntheseform mit Säuren aus Stabilitätsgründen verbietet, geht man den Umweg über die Ammoniumform und anschließende thermische Umwandlung derselben in die Protonenform unter Abspaltung von Ammoniak, welcher ebenfalls wieder dem Prozeß zugeführt werden kann, vgl. US-PS 3.375.065.

Auch in weiteren Patenten wird die Anwendung eines multiplen Ionenaustausches zur Umgehung des Selektivitätsproblems beschrieben. So z. B. in den US-Patentschriften 3.732.326 und 3.503,901, wo über den Weg des mittelbaren Austauschs mit Ammoniumchlorid ein Eintausch von Zn bzw. Mn beschrieben ist.

Gleichermaßen betrifft dies die US-PS 4.556.550 bzw. US-PS 4.666.693 oder auch US-PS 5.916.835.
Allen letztgenannten Schriften ist ein Grundprinzip gemeinsam. nämlich, daß man einen angestrebten hohen Austauschgrad an einem Zeolithen mit einem Kation gegenüber welchem der Zeolith in wäßriger Lösung eine schlechte Selektivität aufweist, dadurch erreicht, daß die vorher mit entsprechend hohem Austauschgrad hergestellte Ammoniumform bei hohem pH-Wert, d. h. pH >7. mit einer, das einzutauschende Kation enthaltender Verbindung umgesetzt wird. Als Triebkraft für diese Reaktion wird in den genannten Schriften beschrieben, daß im Zuge der Umsetzung gezielt ein flüchtiges Reaktionsprodukt - meist gasförmiger Ammoniak - aus dem System entfernt wird. Dieses Prinzip funktioniert ebenfalls bei der Umsetzung im festen Zustand. vgl.: H. G. Karge. H. K. Beyer: "Introduction of Cations into Zeolites by Solid Reaction". in: " Studies in Surface Science and Catalysis", Elsevier. Amsterdam, Vol. 69, 1991. pp. 43-64; hier wird die Ammoniumform des Zeolithen mit einem Salz des einzutauschenden Kations umgesetzt, dessen Anion mit Ammonium flüchtige Verbindungen bildet, wie z. B. Chlorid. In diesem Fall wird also als Triebkraft der Reaktion Ammoniumchlorid der Reaktionszone entzogen.

Die Umsetzung von ammoniumionenhaltigen Zeolithen mit basischen Medien - pH-Wert des Austauschmediums > 7 - ist bereits seit langem bekannt. So werden z. B. Zeolithe vom Typ Clinoptilolith, welche in großem Maßstab zur Entfernung von Fisch-giftigem Ammonium, z. B. aus Fischzuchtgewässern bzw. ammoniumhaltigen Abwässern eingesetzt werden. vgl. US-PS 3.723.308, durch Umsetzung mit Natronlauge regeneriert. Entsprechende Regenerationsverfahren sind z. B. in US-PS 3.985.859 beschrieben.

Weiterhin gemeinam ist den meisten kommerziellen Verfahren. bei welchen mittelbar oder unmittelbar auf die Ammoniumform der jeweiligen Zeolithe zurückgegriffen wird, daß kein Ammoniak bzw. Ammonium als Abprodukt in die Umwelt gelangen darf, vgl. z. B. entsprechende Festlegungen im BImSchG, mithin ein recht aufwendiger Ammoniumrückführungsprozeß installiert werden muß. Bei diesem Prozeß werden ammoniumhaltige Ablösungen zunächst mit einer geeigneten Lauge - meist NaOH oder Ca(OH)₂ - unter solchen Bedingungen umgesetzt, daß der gebildete Ammoniak vollständig über die Gasphase ausgestrippt wird. Dies geschieht über eine Füllkörperkolonne bei erhöhter Temperatur und Hindurchleiten eines entsprechenden Strippgases oder Anlegen eines geeigneten Vakuums. wobei letzterer Fall apparate- und prozeßtechnisch recht aufwendig ist, vgl. US-PA 3.985.859. Die Bindung des so freigesetzten Ammoniaks geschieht meist durch Absorption in einer geeigneten sauren Lösung, wobei, um die umweltrechtlichen Vorgaben bezüglich Ammoniakemissionen einzuhalten und den apparatetechnischen Aufwand insgesamt zu verringern, die Absorptionslösung deutlich sauer - pH-Werte <7 - eingestellt sein muß. Will man diese Lösung jedoch dann wieder zum Ammoniumaustausch an Zeolithen einsetzen. so muß diese saure Lösung durch Zugabe von reinem Ammoniakwasser bzw. Ammoniakgas auf den einer reinen Ammoniumssalzlösung entsprechenden pH-Wert eingestellt werden. Der Gesamtprozeß führt also zwangsläufig zur Entstehung von zusätzlichen Mengen an Ammoniumsalz, welches aus dem Prozeß ausgeschleust und einer anderen Verwendung zugeführt werden muß.

Nachteilig bei den genannten mittelbaren Verfahren unter Anwendung der Ammoniumform von Zeolithen zur Erreichung eines bestimmten Austauschgrades mit einem Ion/Ionen niederer Selektivität ist die Tatsache, daß die Umsetzung der Ammoniumform bei höherem pH-Wert und, um, wie oben bereits beschrieben, die Entfernung des Ammoniaks oder einer anderen flüchtigen Ammoniumverbindung aus der Reaktionszone zu erreichen bei höherer Temperatur und/oder Hindurchleiten von Luft oder eines anderen geeigneten Gases und/oder Anlegen eines Vakuums durchgeführt werden muß. Bei der Anwendung von höheren Temperaturen im erhöhten pH-Bereich besteht die Gefahr einer irreversiblen Schädigung der Zeolithstruktur bzw. die Gefahr der Hydrolyse von gegebenenfalls bereits im Zeolithgerüst befindlichen mehrwertigen Kationen. Das Hindurchleiten von nicht speziell vorgereinigter Luft in solchen Systemen birgt die Gefahr der Bildung unlöslicher Carbonate/Hydrogencarbonate durch Reaktion des in der Luft vorhandenen CO₂ mit Hydroxidionen. d. h.. eine aufwendige Luftvorreinigung bzw. der Einsatz von CO₂-freien Gasen, vgl. US-PS 3.985.859, ist meist unvermeidlich.

Der vorliegenden Erfindung liegt folglich das Problem zugrunde. daß sich Zeolithe, ionenaustauschbare Strukturanaloga der Zeolithe, ionenaustauschbare, röntgenamorphe. anorganische Substanzen. Gemische aus den vorher genannten Stoffgruppen sowie ionenaustauschbare, organische Substanzen in bestimmten Ionenformen aufgrund von schlechten Austauschselektivitäten in wäßriger Lösung nicht bzw. nur sehr aufwendig durch direkten Ionenaustausch herstellen lassen und die oben beschriebenen, dem Stand der Technik gemäßen. indirekten Verfahren unter Verwendung der Ammoniumform der genannten Stoffe mit einem hohen apparatetechnischen bzw. kostenmäßigen Aufwand verbunden sind.

Dieses Problem wird durch die Anwendung der in den kennzeichnenden Teilen der Patentansprüche aufgeführten Verfahren gelöst.

Überraschend wurde festgestellt, daß die auf diesem Wege hergestellten Zeolithe einen mit den gemäß bisher beschriebenen Prozessen hergestellten Zeolithen vergleichbar hohen Ionenaustauschgrad aufweisen und die Hydrolyse von möglicherweise bereits vorher im Zeolithgerüst befindlichen mehrwertigen Kationen vermieden wird.

Als Vorteil dieser Erfindung gegenüber dem bekannten Stand der Technik der Umsetzung von z. B. ammoniumhaltigen Zeolithen mit Ionen, welche aufgrund schlechter Austauschselektivitäten nicht oder nur sehr schwierig durch direkten Austausch zugänglich sind. ergibt sich:
a) daß im Zuge der Umsetzung kein flüchtiger Ammoniak bzw. eine andere flüchtige Ammoniumverbindung aus dem wäßrigen Medium als der Reaktionszone ausgetrieben werden und in einem zusätzlichen Prozeß wieder aufgearbeitet werden muß.
b) die anfallenden Lösungen aus der genannten Umsetzung als Waschlösung im vorangegangenen Ammoniumaustauschprozeß eingesetzt und dadurch Waschwasser eingespart und gleichzeitig der Umsetzungsgrad des einzutauschenden Ions erhöht wird.
c) der Einsatz von zusätzlichem Ammoniak zur Einstellung des pH-Wertes der rückgeführten Lösungen aus dem Ammoniumrückgewinnungsprozeß und damit die unvermeidbare Entstehung von zusätzlichem Ammoniumsalz entfällt.
d) der Einsatz von CO₂-freien Strippgasen entfällt bzw. deren Menge deutlich verringert werden kann, und
e) der gesamte Ammoniumrückgewinnungsprozeß stofflich und energetisch entlastet wird.

Die im erfindungsgemäßen Prozeß hergestellten Zeolithe eignen sich insbesondere als hochselektive Adsorbensund Katalyatorkomponenten.

### Beispiele Lithiumaustausch mit LiOH.H₂O an NH₄LSX Zeolithen

Für die folgenden Beispiele 1 bis 8 wurde von einer Ammoniumform bzw. gemischten Ammonium Seltenerd-Form von Zeolithen des Typs X mit einem Si/Al-Molverhältnis von ca. 1.0 ausgegangen, die auf die übliche Weise - vgl. z. B. US-PS 5.916.836 - hergestellt wurden. Die entsprechenden Zeolith-Proben enthielten Restalkaligehalte von 0.32 % Na₂O bzw. 0.17 % K₂O sowie ca. 36 % Wasser für die seltenerdfreie Ammoniumform - im folgenden NH₄RELSX genannt - sowie von 0,07 % Na₂O bzw. 0,15 % K₂O sowie ca. 25 % Wasser für die seltenerdhaltige Ammoniumform - im folgenden NH₄RELSX genannt.

### Beispiel 1

Zur Durchführung des Lithiumaustausches wurden 200 g NH₄LSX in einem geeigneten Becherglas in 600 ml destillierten Wasser angemaischt und im Verlauf von 30 Minuten gerührt. Anschließend wurden insgesamt 42 g LiOH.H₂O in Portionen zugegeben. Nach 2 Stunden wurde die erhaltene Mischung geteilt. Etwa die Hälfte der Probe wurde weitere 6 Stunden bei Raumtemperatur - ca. 23°C - gerührt, die andere Hälfte bei gleicher Temperatur ebenfalls 6 Stunden bei Raumtemperatur durch einen intensiven Stickstoffstrom zum Austreiben des in der Mutterlauge gelösten Ammoniums behandelt. Die Suspension wurde auf einem dichten Papierfilter abgesaugt, die erhaltene Mutterlauge separat vom Waschwasser aufgefangen und auf Ammoniumgehalt analysiert. Der Filterkuchen wurde mit drei Portionen zu je 300 ml destiliertem Wasser gewaschen, scharf abgesaugt und anschließend unter einer Infrarotlampe bei maximal 60°C getrocknet. Für das getrocknete Produkt wurde der Glühverlust bei 950°C sowie der auf den Glührückstand bezogene Gehalt an Lithiumoxid (Li₂O) unter Verwendung eines Flammenphotometers (FLAPHOvar, Carl Zeiss Jena) ermittelt.
Ein Teil des getrockneten Filterkuchens wurde langsam unter Vakuum (VacPrep 061, Fa. micromeritics) auf eine Temperatur von 400°C erwärmt und bei dieser Temperatur und einem Restvakuum kleiner 0,05 mbar mindestens weitere 2 Stunden aktiviert. Anschließend wurde die Masse der aktivierten Probe durch Wägung ermittelt und die Stickstoffadsorption bei 25°C und 1000 mbar Stickstoffdruck unter Verwendung eines Adsorptionsmeßgerätes (Gemini 2370. Fa. micromeritics) ermittelt.

Die erhaltenen Ergebnisse sind zusammengefaßt in Tabelle 1 dargestellt. Wie man aus den Daten ersieht, sind die erhaltenen Werte für den Li₂O-Gehalt und die Stickstoffadsorption bei weitgehend aus der Austauschlösung entferntem Ammoniak nur unbedeutend höher. als im Fall der noch weitgehend Ammoniak enthaltenden Lösung.

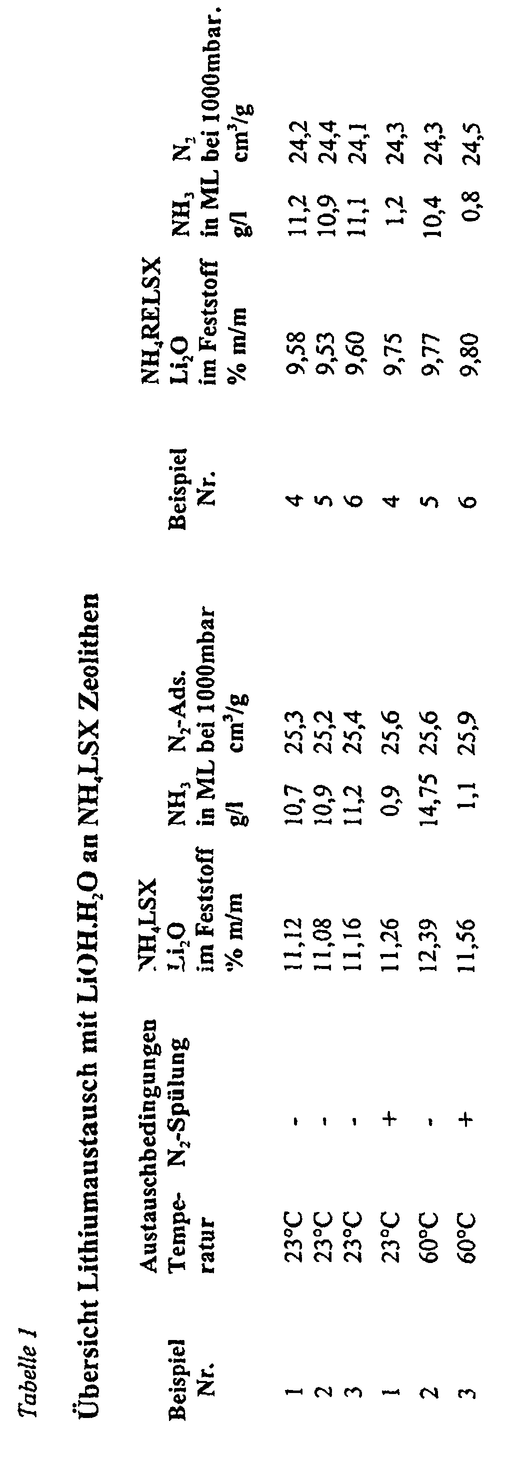

### Beispiel 2

200 g NH₄LSX wurden in einem geeigneten Becherglas in 600 ml destilliertem Wasser angemaischt und im Verlauf von 30 Minuten gerührt. Anschließend wurden insgeamt 42 g LiOH.H₂O in Portionen zugegeben. Nach 2 Stunden wurde die erhaltene Mischung geteilt. Etwa die Hälfte der Probe wurde weitere 6 Stunden bei Raumtemperatrur - ca. 23°C - gerührt. die andere Hälfte bei 60°C ohne weiteres Rühren im Verlauf von 6 Stunden behandelt. Die weitere Verarbeitung der Suspensionen sowie die Durchführung der Analysen erfolgte auf die in Beispiel 1 beschriebene Weise. Die erhaltenen Ergebnisse sind zusammengefaßt in Tabelle 1 dargestellt.

Wie aus diesen Daten hervorgeht, gibt es trotz deutlicher Unterschiede im Lithiumoxidgehalt der erhaltenen Proben keinen signifikaten Unterschied in der Stickstoffadsorption.

### Beispiel 3

200 g NH₄LSX wurden in einem geeigneten Becherglas in 600 ml destilliertem Wasser angemaischt und im Verlauf von 30 Minuten gerührt. Anschließend wurden insgesamt 42 g LiOH.H₂O in Portionen zugegeben. Nach 2 Stunden wurde die erhaltene Mischung geteilt. Etwa die Hälfte der Probe wurde weitere 6 Stunden bei Raumtemperatrur - ca. 23°C - gerührt. die andere Hälfte bei 60°C durch einen intensiven Stickstoffstrom im Verlauf von 6 Stunden zum Austreiben des in der Mutterlauge gelösten Ammoniums behandelt. Die weitere Verarbeitung der Suspensionen sowie die Durchführung der Analysen erfolgte auf die in Beispiel 1 beschriebene Weise. Die erhaltenen Ergebnisse sind zusammengefaßt in Tabelle 1 dargestellt.

Wie aus diesen Daten hervorgeht, gibt es trotz deutlicher Unterschiede im Lithiumoxidgehalt der erhaltenen Proben nur einen leichten Anstieg in der Stickstoffadsorption für die bei 60°C unter Stickstoffeintrag behandelte Probe.

### Beispiel 4

Zur Durchführung des Lithiumionenaustauschs wurden 200 g NH₄RELSX in einem geeigneten Becherglas in 600 ml destillierten Wasser angemaischt und im Verlauf von 30 Minuten geführt. Anschließend wurden insgesamt 43 g LiOH.H₂O in Portionen zugegeben. Nach 2 Stunden wurde die erhaltene Mischung geteilt. Etwa die Hälfte der Probe wurde weitere 6 Stunden bei Raumtemperatur - ca. 23°C - gerührt, die andere Hälfte bei gleicher Temperatur ebenfalls 6 Stunden bei Raumtemperatur durch einen intensiven Stickstoffstrom zum Austreiben des in der Mutterlauge gelösten Ammoniums behandelt. Die weitere Verarbeitung der Suspensionen sowie die Durchführung der Analysen erfolgte auf die in Beispiel 1 beschriebene Weise. Die erhaltenen Ergebnisse sind zusammengefaßt in Tabelle 1 dargestellt.

Wie man aus den Daten ersieht, erhöht sich durch die Entfernung des Ammoniaks aus der Austauschlösung zwar der Li₂O-Gehalt im Feststoff, jedoch wird die Stickstoffadsorption gegenüber der Vergleichsprobe nur unwesentlich besser.

### Beispiel 5

200 g NH₄RELSX wurden in einem geeigneten Becherglas in 600 ml destillierten Wasser angemaischt und im Verlauf von 30 Minuten gerührt. Anschließend wurden insgesamt 43 g LiOH.H₂O in Portionen zugegeben. Nach 2 Stunden wurde die erhaltene Mischung geteilt. Etwa die Hälfte der Probe wurde weitere 6 Stunden bei Raumptemperatur - ca. 23°C - gerührt. die andere Hälfte bei 60°C ohne weiteres Rühren im Verlauf von 6 Stunden behandelt. Die weitere Verarbeitung der Suspensionen sowie die Durchführung der Analysen erfolgte auf die in Beispiel 1 beschriebene Weise. Die erhaltenen Ergebnisse sind zuammengefaßt in Tabelle 1 dargestellt.

Wie aus diesen Daten hervorgeht, gibt es trotz deutlicher Unterschiede im Lithiumoxidgehalt der erhaltenen Proben keinen signifikaten Unterschied in der Stickstoffadsorption.

### Beispiel 6

200 g NH₄RELSX wurden in einem geeigneten Becherglas in 600 ml destillierten Wasser angemaischt und im Verlauf von 30 Minuten gerührt. Anschließend wurden insgesamt 43 g LiOH.H₂O in Portionen zugegeben. Nach 2 Stunden wurde die erhaltene Mischung geteilt. Etwa die Hälfte der Probe wurde weitere 6 Stunden bei Raumtemperatur - ca. 23°C - gerührt. die andere Hälfte bei 60°C durch einen intensiven Stickstoffstrom im Verlauf von 6 Stunden zum Austreiben des in der Mutterlauge gelösten Ammoniums behandelt. Die weitere Verarbeitung der Suspensionen sowie die Durchführung der Analysen erfolgte auf die in Beispiel 1 beschriebene Weise. Die erhaltenen Ergebnisse sind zusammengefaßt in Tabelle 1 dargestellt.

Wie aus diesen Daten hervorgeht, gibt es trotz deutlicher Unterschiede im Lithiumoxidgehalt der erhaltenen Proben keinen signifikaten Unterschied in der Stickstoffadsorption für die beiden Proben.

### Beispiel 7

Während die für die seltenerdfreien Zeolithproben bestimmten Lithiumoxidgehalte den bei den vorgegebenen Restalkaligehalten zu erwartenden Werten entsprechen, wurden für die seltenerdhaltigen Proben überraschenderweise deutlich höhere Werte gefunden. Da diese Unterschiede bei beiden Arten von Ausgangsmaterial reproduziert werden konnten, lag die Vermutung nahe, daß die Ursache in der Menge der im Material enthaltenen seltenen Erden begründet liegt. Aus diesem Grund wurde der Versuch gemäß Beispiel 5 mit modifiziertem Ausgangsmaterial wiederholt. Dazu wurden 300 g NH₄RELSX in 1000 ml destilliertem Wasser suspendiert und nachträglich mit einer solchen Menge Seltenerdchloridlösung behandelt. daß das Molverhältnis seltene Erden - als dreiwertige Kationen berechnet - zu Aluminium, im folgenden als RE/Al bezeichnet, ca. 0,2 beträgt. Das erhaltene Material wurde analog der in Beispiel 1 beschriebenen Weise gewaschen und getrocknet und wird im folgenden als NH₄RE2OLSX bezeichnet.

Durch Durchführung des Lithiumaustausches wurden 90 g NH₄RE2OLSX in einem geeigneten Becherglas in 300 ml destillierten Wasser angemaischt und im Verlauf von 30 Minuten gerührt. Anschließend wurden insgesamt 18 g LiOH.H₂O in Portionen zugegeben. Nach 2 Stunden wurde die erhaltene Mischung geteilt. Etwa die Hälfte der Probe wurde weitere 2 Stunden bei Raumtemperatur - ca. 23°C - gerührt. die andere Hälfte bei 60°C ohne weiteres Rühren im Verlauf von 8 Stunden behandelt. Die weitere Verarbeitung der Suspensionen sowie die Durchführung der Analysen erfolgte auf die in Beispiel 1 beschriebene Weise.
Die Ergebnisse sind in Tabelle 2 zusammengefaßt.

**Tabelle 2**

| **Temperatur** | **Li**_{**2**}**O,** | **N**_{**2**}**-Adsorption** | **Molverhältnisse** | | | | |
|---|---|---|---|---|---|---|---|
| | **% m/m** | **bei 1000 mbar Ncm**^{**3**}**/g** | **Li/Al** | **RE/Al** | **Na/Al** | **K/Al** | **∑M**^{**+**}**/A1** |
| 23°C | 9.04 | 23.5 | 0.812 | 0.198 | 0.002 | 0.004 | 1.016 |
| 62°C | 9.45 | 23.3 | 0.831 | 0.199 | 0.002 | 0.004 | 1.036 |

Wie aus den Daten dieser Tabelle ersichtlich, führt der deutlich höhere Lithiumgehalt der bei 62°C behandelten Probe nicht zu einer Erhöhung der statischen Adsorptionskapazität für Stickstoff, andererseits weist diese Probe einen erhöhten Kationenanteil, bezogen auf den Aluminiumgehalt auf, wenn man, wie bisher annimmt, daß sämtliche Seltenerdionen als dreiwertige Kationen vorliegen. Es ist jedoch zu vermuten, daß durch Hydrolyse im stark alkalischen Medium der Austauschlösungen (pH-Werte ≥ 12.5) zweioder gar einwertige Spezies etwa der Art La(OH)²⁺ bzw. La(OH)₂⁺ entstehen, wodurch formell "Überschußkationen" im Zeolithhohlraum entstehen. Diese Hydrolyse erhöht den Verbrauch an Lithiumhydroxid, ohne die Adsorptionseigenschaften des Materials zu verbessern.

Zum anderen erfolgt aus den Daten der Tabelle 2, daß der Ionenaustausch auch bei Raumtemperatur etwa 4 Stunden nach Beendigung der Lithiumhydroxidzugabe weitgehend abgeschlossen ist. während für die Austreibung des freien Ammoniaks aus der Mutterlösung im allgemeinen eine längere Zeit erforderlich ist.

### Beispiel 8

Ein Ziel der vorliegenden Erfindung ist die sinnvolle Verwendung des in der Mutterlauge enthaltenen kostenintensiven Lithiumhydroxids sowie die Vermeidung der Produktion eines Ammoniumsulfatüberschusses bei der Aufarbeitung der Mutterlaugen des Ammoniumaustausches. Diese beiden Probleme werden erfindungsgemäß dadurch gelöst, daß nach der Beendigung des Ammoniumaustausches und vor dem eigentlichen Lithiumaustausch der gründlich gewaschene Filterkuchen mit der lithiumhydroxid- und ammoniumhaltigen Mutterlauge behandelt wird. Zur Verwertung der lithiumhydroxidhaltigen Mutterlauge wurden 10 g NH₄RELSX in Wasser angemaischt und auf einem Büchnertrichter zu einem Filterkuchen von ca. 5 mm Höhe abgesaugt. Uber diesen Filterkuchen wurden 30 ml Mutterlauge des Lithiumaustauschs des Beispiels 5 mit einem Gehalt von 0.13 % Li₂O insgesamt dreimal jeweils innerhalb von 2 - 3 min gesaugt. Die nach der dritten Aufgabe durchlaufende Mutterlauge wies einen Li₂O-Gehalt von nur noch 0.007 % bei einem Ammoniakgehalt von 10 g/l auf. Das bedeutet eine Abreicherung um fast 95 % aus Ausgangsgehalts an Lithiumhydroxid. Damit kann diese Ablauge anstelle von Ammoniakwasser zur Einstellung des pH-Werts einer stark sauren Ammoniumsulfat-Recycling-Lauge Verwendung finden. Im analog Beispiel 1 nachbehandelten und untersuchten Filterkuchen wurden 0.57 % Li₂O gefunden.

Die in den Ausführungsbeispielen aufgeführten Reaktionen erfolgen bei Temperaturen von -10...50°C, vorzugsweise bei -1...35°C und bei einem Druck von 0.5...5bar. vorzugsweise bei 0.9...1.5bar. Das Zusetzen der nach Abschluß der Reaktion durch Filtration abgetrennten Mutterlauge zum Prozeß des vorangestellten Ammoniumaustausches erfolgt bei Temperaturen von -10...100°C. vorzugsweise bei -1...35°C diskontinuierlich im Rührbehälter oder halbkontinuierlich auf einer Filterpresse oder vollkontinuierlich auf einem Bandfilter.

Die vor der Reaktion gezielt mit Ammoniumionen beladenen Materialien werden durch Ionenaustausch von natrium- und/oder kalium- und/oder calcium- und/oder magnesiumionenhaltigen Ausgangsmaterialien mit Ammoniumlösungen, welche durch Einstellung von saurer Ammoniumrohlösung aus dem Ammoniumrückgewinnungsprozeß mit nach Zusetzen der nach Abschluß der Reaktion durch Filtration abgetrennten Mutterlauge zum Prozeß des vorangestellten Ammoniumaustausches verbleibender ammoniakhaltiger Ablauge auf den einer aus dem jeweiligen Ammoniumsalz gewonnenen Ammoniumalzlösung entsprechenden pH-Wert erhalten wurden. hergestellt.

Bei den Ausgangsmaterialien handelt es sich um vorzugsweise Zeolithe. insbesondere vom Typ A. X oder Y. Bei den einzutauschenden Kationen handelt es sich vorzugsweise um Kationen der Elemente der ersten Hauptgruppe des Periodensystems der Elemente, insbesondere um Li-Kationen. Die erfindungsgemäß hergestellten Stoffe werden vorzugsweise als Adsorptionsmittel/- komponenten eingesetzt und dienen insbesondere zur adsorptiven Anreicherung von Sauerstoff aus Luft.

## Patentansprüche

1. Verfahren zur Modifizierung ionenaustauschbarer Stoffe, welche die nachfolgenden Stoffgruppen betreffen: Zeolithe, ionenaustauschbare Strukturanaloga der Zeolithe, ionenaustauschbare, röntgenamorphe, anorganische Substanzen, Gemische aus den vorher genannten Stoffgruppen sowie ionenaustauschbare, organische Substanzen durch Reaktion der vorher gezielt mit Ammoniumionen beladenen Materialien mit Stubstanzen, welche die einzutauschenden Kationen, die als Elemente in der 1. und 2. Hauptgruppe im Periodensystem der Elemente stehen, einzeln oder im Gemisch enthalten, in wäßrigem Medium bei pH-Werten > 7, **dadurch gekennzeichnet, dass**
- der bei der Reaktion der Ammoniumform der genannten Substanzen gebildete, flüchtige Ammoniak bzw. die gebildete, flüchtige Ammoniumverbindung weitgehend in der als Reaktionszone vorliegenden wäßrigen Phase gehalten wird,
- die nach Abtrennung des Feststoffes vorliegende wäßrige Mutterlauge die Waschlösung für den vorangegangenen Ammoniumaustauschprozeß bildet,
- die durch den vorangegangenen Prozeß entstehende Ablauge zur Einstellung des pH-Wertes der im sauren pH-Bereich (pH <3) vorliegenden Ammoniumrohlösung aus dem Ammonium-Rückgewinnungsprozeß verwendet wird.

2. Verfahren nach Anspruch 1, **dadurch gekennzeichnet, daß** die Reaktion bei Temperaturen von -10...50°C, vorzugsweise bei -1...35°C erfolgt.

3. Verfahren nach Anspruch 1 und 2, **dadurch gekennzeichnet, daß** die Reaktion bei einem Druck von 0,5...5 bar, vorzugsweise bei einem Druck von 0.9...1.5 bar erfolgt.

4. Verfahren nach einem der vorangegangenen Ansprüche. **dadurch gekennzeichnet, daß** das Zusetzen der nach Abschluß der Reaktion durch Filtration abgetrennten Mutterlauge zum Prozeß des vorangestellten Ammoniumaustausches bei Temperaturen von -10...100°C, vorzugsweie bei -1...35°C erfolgt.

5. Verfahren nach Anspruch 4, **dadurch gekennzeichnet, daß** das Zusetzen der nach Abschluß der Reaktion durch Filtration abgetrennten Mutterlauge zum Prozeß des vorangestellten Ammoniumaustausches diskontinuierlich im Rührbehälter oder halbkontinuierlich auf einer Filterpresse oder vollkontinuierlich auf einem Bandfilter erfolgt.

6. Verfahren nach einem der vorangegangenen Ansprüche. **dadurch gekennzeichnet, daß** die vor der Reaktion gezielt mit Ammoniumionen beladenen Materialien durch Ionenaustausch von natriumund/oder kalium- und/oder calcium- und/oder magnesiumionenhaltigen Ausgangsmaterialien mit Ammoniumlösungen. welche durch Einstellung von saurer Ammoniumrohlösung aus dem Ammoniumrückgewinnungsprozeß mit nach Zusetzen der nach Abschluß der Reaktion durch Filtration abgetrennten Mutterlauge zum Prozeß des vorangestellten Ammoniumaustausches verbleibender ammoniakhaltiger Ablauge auf einen dem einer aus dem jeweiligen Ammoniumsalz gewonnenen Ammoniumsalzlösung entsprechenden pH-Wert gemäß Anspruch 1 erhalten wurden, hergestellt werden.

7. Verfahren nach einem der vorangegangenen Ansprüche. **dadurch gekennzeichnet, daß** die Ausgangsmaterialien zur Stoffgruppe der Zeolithe gehören.

8. Verfahren nach Anspruch 7, **dadurch gekennzeichnet, daß** es sich bei den Ausgangsmaterialien um Zeolithe vom Typ A. X oder Y handelt.

9. Verfahren nach einem der vorangegangenen Ansprüche. **dadurch gekennzeichnet, daß** es sich bei den einzutauschenden Kationen um Kationen der Elemente der 1. Hauptgruppe des Periodensystems der Elemente handelt.

10. Verfahren nach Anspruch 9, **dadurch gekennzeichnet, daß** es sich bei den einzutauschenden Kationen um Li-Kationen handelt.

11. Verfahren nach einem der vorangegangenen Ansprüche. **dadurch gekennzeichnet, daß** die erfindungsgemäß hergestellten Stoffe als Adsorptionsmittel/-komponenten eingesetzt werden.

12. Verfahren nach einem der vorangegangenen Ansprüche. **dadurch gekennzeichnet, daß** die erfindungsgemäß hergestellten Adsorptionsmittel zur adsorptiven Anreicherung von Sauerstoff aus Luft eingesetzt werden.

## Claims

1. Process for modifying ion-exchangeable substances which relate to the following groups of substances: zeolites, ion-exchangeable structural analogues of the zeolites, ion-exchangeable, X-ray-amorphous, inorganic substances, mixtures of the previously mentioned groups of substances and ion-exchangeable, organic substances by reaction of the materials selectively loaded beforehand with ammonium ions with substances which contain, individually or as a mixture, the cations which are to be exchanged and which are present as elements in the 1st and 2nd main groups of the Periodic Table of the Elements, in an aqueous medium at pH value > 7, **characterized in that**
- the volatile ammonia formed in the reaction of the ammonium form of said substances or the volatile ammonium compound formed is substantially kept in the aqueous phase present as the reaction zone,
- the aqueous mother liquor present after the solid has been separated off forms the wash solution for the preceding ammonium exchange process,
- the waste liquor forming as a result of the preceding process is used for adjusting the pH value of the crude ammonium solution present in the acidic pH range (pH < 3) and obtained from the ammonium recovery process.

2. Process according to Claim 1, **characterized in that** the reaction is carried out at temperatures of -10 to 50°C, preferably at -1 to 35°C.

3. Process according to Claims 1 and 2, **characterized in that** the reaction is carried out at a pressure of 0.5 to 5 bar, preferably at a pressure of 0.9 to 1.5 bar.

4. Process according to any of the preceding claims, **characterized in that** the addition of the mother liquor separated off after the end of the reaction by filtration to the process of the preceding ammonium exchange is carried out at temperatures of -10 to 100°C, preferably at -1 to 35°C.

5. Process according to Claim 4, **characterized in that** the addition of the mother liquor separated off after the end of the reaction by filtration to the process of the preceding ammonium exchange is carried out batchwise in a stirred container or semi-continuously on a filter press or completely continuously on a belt filter.

6. Process according to any of the preceding claims, **characterized in that** the materials selectively loaded before the reaction with ammonium ions are prepared by ion exchange of starting materials containing sodium ions and/or potassium ions and/or calcium ions and/or magnesium ions with ammonium solutions which were obtained according to Claim 1 by adjusting acidic crude ammonium solution from the ammonium recovery process with ammonia-containing waste liquor remaining after addition of the mother liquor separated off after the end of the reaction by filtration to the process of the preceding ammonium exchange to a pH value corresponding to that of an ammonium salt solution obtained from the respective ammonium salt.

7. Process according to any of the preceding claims, **characterized in that** the starting materials belong to the group of substances consisting of the zeolites.

8. Process according to Claim 7, **characterized in that** the starting materials are zeolites of the type A, X or Y.

9. Process according to any of the preceding claims, **characterized in that** the cations to be exchanged are cations of the elements of the 1st main group of the Periodic Table of the Elements.

10. Process according to Claim 9, **characterized in that** the cations to be exchanged are Li cations.

11. Process according to any of the preceding claims, **characterized in that** the substances prepared according to the invention are used as adsorbents/adsorption components.

12. Process according to any of the preceding claims, **characterized in that** the adsorbents prepared according to the invention are used for the adsorptive enrichment of oxygen from air.

## Revendications

1. Procédé pour la modification de substances échangeuses d'ions, qui concernent les groupes de substances suivants : zéolithes, analogues structuraux des zéolithes aptes à l'échange d'ions, substances minérales échangeuses d'ions, amorphes aux rayons X, mélanges des groupes de substances précités ainsi que substances organiques échangeuses d'ions, par réaction des matériaux préalablement chargés intentionnellement d'ions ammonium, avec des substances qui contiennent les cations à échanger qui se trouvent sous forme d'éléments dans les groupes 1A et 2A du tableau périodique des éléments, seuls ou en mélange, en milieu aqueux, à des pH < 7, **caractérisé en ce que**
- l'ammoniac volatil formé ou le composé d'ammonium volatil formé lors de la réaction de la forme ammonium des substances citées est maintenu en majeure partie dans la phase aqueuse présente dans la zone de réaction,
- la liqueur-mère aqueuse présente après séparation de la matière solide constitue la solution de lavage pour le processus d'échange d'ammonium précédent,
- la liqueur produite par le processus précédent est utilisée pour l'ajustement du pH de la solution brute d'ammonium se trouvant dans le domaine de pH acide (pH < 3), provenant du processus de récupération d'ammonium.

2. Procédé selon la revendication 1, **caractérisé en ce que** la réaction s'effectue à des températures de -10 à 50°C, de préférence de -1 à 35°C.

3. Procédé selon la revendication 1 ou 2, **caractérisé en ce que** la réaction s'effectue sous une pression de 0,5 à 5 bars, de préférence sous une pression de 0,9 à 1,5 bar.

4. Procédé selon l'une quelconque des revendications précédentes, **caractérisé en ce que** l'addition de la liqueur-mère, séparée par filtration après la fin de la réaction, dans le processus précédent de l'échange d'ammonium, s'effectue à des températures de -10 à 100°C, de préférence de -1 à 35°C.

5. Procédé selon la revendication 4, **caractérisé en ce que** l'addition de la liqueur-mère, séparée par filtration après la fin de la réaction, dans le processus précédent d'échange d'ammonium, s'effectue en mode discontinu en récipient à agitation ou en mode semi-continu sur un filtre-presse ou en mode totalement continu sur un filtre à courroie.

6. Procédé selon l'une quelconque des revendications précédentes, **caractérisé en ce que** les matériaux chargés intentionnellement d'ions ammonium avant la réaction sont préparés par échange d'ions de produits de départ, contenant des ions sodium et/ou potassium et/ou calcium et/ou magnésium, avec des solutions d'ammonium qui ont été obtenues selon la revendication 1, par ajustement de la solution brute d'ammonium acide, provenant du processus de récupération d'ammonium, avec de la liqueur contenant de l'ammoniac, restant après addition de la liqueur-mère séparée par filtration après la fin de la réaction, dans le processus de l'échange d'ammonium précédent, à un pH correspondant à une solution de sel d'ammonium obtenue à partir du sel d'ammonium respectif.

7. Procédé selon l'une quelconque des revendications précédentes, **caractérisé en ce que** les produits de départ appartiennent au groupe de substances des zéolithes.

8. Procédé selon la revendication 7, **caractérisé en ce que** les produits de départ consistent en des zéolithes du type A, X ou Y.

9. Procédé selon l'une quelconque des revendications précédentes, **caractérisé en ce que** les cations à échanger consistent en des cations des éléments du groupe 1A du tableau périodique des éléments.

10. Procédé selon la revendication 9, **caractérisé en ce que** les cations à échanger consistent en cations Li.

11. Procédé selon l'une quelconque des revendications précédentes, **caractérisé en ce que** les substances préparées selon l'invention sont utilisées en tant que composants/agents d'adsorption.

12. Procédé selon l'une quelconque des revendications précédentes, **caractérisé en ce que** les agents d'adsorption préparés selon l'invention sont utilisés pour l'enrichissement par adsorption d'oxygène de l'air.
